# EUROPÄISCHE PATENTSCHRIFT

(11) **EP 1 905 520 B1**
(45) Veröffentlichungstag und Bekanntmachung des Hinweises auf die Patenterteilung: **26.03.2014**
(21) Anmeldenummer: 07018984.0
(22) Anmeldetag: 26.09.2007
(51) Int. Cl.: B08B 3/04, A21B 3/16

(54) **Verfahren und Vorrichtung zum Reinigen von Backblechen**
Method and device for cleaning baking trays
Procédé et dispositif pour nettoyer des plateaux de cuisson

(30) Priorität: 28.09.2006 DE 202006014931 U
(43) Veröffentlichungstag der Anmeldung: 02.04.2008
(73) Patentinhaber: Ritzer, Christine, 6343 Erl (AT)
(72) Erfinder: Ritzer, Josef, 6343 Erl (AT)
(74) Vertreter: Klingseisen, Franz

(56) Entgegenhaltungen:
- DE-A1- 1 930 157
- DE-A1- 10 047 734
- DE-U1- 29 610 946
- DE-U1- 29 701 134
- GB-A- 2 181 205
- US-A- 5 709 235

## Beschreibung

In Bäckereien, insbesondere Großbäckereien, ist das Reinigen von Backblechen und Backformen sehr aufwändig, weil die Bleche durch eine Hebevorrichtung in einen Reinigungsbehälter mit Reinigungsflüssigkeit transportiert werden müssen. Nach dem Lösen der Backrückstände werden die Bleche wieder heraus gehoben und dann durch einen Hochdruckreiniger abgewaschen. Andere Maschinen (Bürstenanordnungen) können nur ganz bestimmte Typen von Backblechen reinigen und Backformen nicht.

DE 100 47 734 A1 beschreibt einen Behälter, in dem zu reinigende Stikkenwagen eingesetzt werden, wobei aus einem Vorlagebehälter Reinigungslösung in den Behälter gepumpt wird und nach dem Abpumpen der Reinigungslösung aus einem dritten Behälter Spülwasser in den Behälter gepumpt wird.

DE 296 10 946 U1 beschreibt ein Neutralisationsbecken bei einer Anlage zum Reinigen von mit eingebrännten organischen Rückständen verschmutzten Metallteilen, wobei das Neutralisationsbecken mit einer Mittelwand versehen ist, um das Becken in zwei Beckenbereiche zu unterteilen, sodass die zu neutralisierenden, aus einer Tauchwanne kommenden Metallteile nacheinander in das erste und dann in das zweite Neutralisationsbad eingetaucht werden können.

DE 19 30 157 A1 beschreibt eine Einrichtung zum Reinigen von Gitterrosten, wobei ein Waschbehälter in mehrere Waschbereiche unterteilt ist, die jeweils Heizvorrichtungen aufweisen und die im Umlaufbetrieb mit Waschflüssigkeit gefüllt werden. Die einzelnen Behälterbereiche sind durch Verbindungsleitungen miteinander verbunden, damit die Waschflüssigkeit aus dem einen Behälterbereich in den folgenden Behälterbereich umgepumpt werden kann.

GB-A-2 181 205 beschreibt eine Reinigungsanlage mit im Kreis angeordneten Stationen, wobei Stapel von zu reinigenden Blechen zu den einzelnen Stationen bewegt und an diesen abgesenkt und angehoben werden. Es sind Vorwaschstationen, eine Waschstation, eine Spülstation und zwei Trockenstationen vorgesehen.

Aufgabe der Erfindung ist es, ein Verfahren und eine Vorrichtung zu schaffen, mittels dem bzw. der das Reinigen von allen Arten von Backblechen und Backformen einfach und schnell vorgenommen werden kann.

Dies wird erfindungsgemäß nach einer bevorzugten Ausführungsform dadurch erreicht, dass eine Wanne durch eine Trennwand in wenigstens zwei Bereiche unterteilt wird, die durch eine Verbindungsleitung so miteinander verbunden sind, dass eine Reinigungsflüssigkeit von einem ersten Wannenbereich in einen zweiten Wannenbereich gepumpt werden kann und umgekehrt. Hierdurch können Backbleche in den einen Wannenbereich, der mit der Reinigungsflüssigkeit gefüllt ist, eingetaucht werden, so dass sich die Backrückstände und Verschmutzungen lösen, worauf, - statt die Bleche aus der Reinigungsflüssigkeit zu heben -, mittels einer Pumpe die Reinigungsflüssigkeit in den anderen Wannenbereich umgepumpt wird, in den zuvor eine weitere Charge von zu reinigenden Backblechen eingesetzt wurde. Die bereits gereinigten Backbleche können im ersten Wannenbereich nun abtropfen oder auch gespült werden, während im zweiten Wannenbereich bereits eine weitere Gruppe von Backblechen mittels der umgepumpten Reinigungsflüssigkeit gereinigt wird. Nach dem Abtropfen bzw. Spülen der ersten Gruppe von Backblechen im ersten Wannenbereich kann diese Gruppe von gereinigten Backblechen entnommen und eine neue Gruppe von zu reinigenden Backblechen eingesetzt werden, worauf die Reinigungsflüssigkeit zurückgepumpt wird und sich der Vorgang wiederholt.

Auf diese Weise können bei kompakter Bauform der Vorrichtung Backbleche und Backformen auch in größeren Mengen schnell gereinigt werden.

Die Erfindung wird beispielsweise anhand der Zeichnungen näher erläutert. Es zeigen:
- Fig. 1: schematisch eine Wanne mit Unterteilung und darin eingesetzten Backblechen, und
- Fig. 2: eine perspektivische Ansicht einer praktischen Ausführungsform.

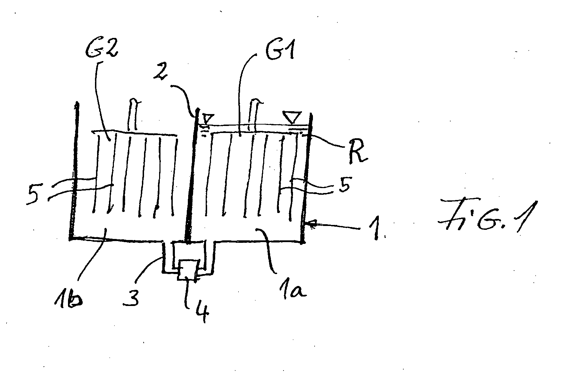

In Fig. 1 ist schematisch eine Wanne mit 1 bezeichnet, die durch eine Trennwand 2 in einen ersten Bereich 1 a und einen zweiten Bereich 1b unterteilt ist. Die beiden Wannenbereiche 1a und 1b sind durch eine Fluidleitung 3 verbunden, durch die eine beispielsweise im ersten Wannenbereich 1a befindliche Reinigungsflüssigkeit R mittels einer Pumpe 4 in den zweiten Wannenbereich 1 b umgepumpt werden kann.

In den ersten Wannenbereich 1a, in dem sich die mit chemischen Zusätzen versehene Reinigungsflüssigkeit R befindet, wird eine erste Gruppe von Backblechen 5 eingesetzt, wobei sich Backrückstände und Verunreinigungen lösen. Gleichzeitig oder anschließend kann eine zweite Gruppe von zu reinigenden Backblechen in den zweiten Wannenbereich 1 b eingesetzt werden. Nach dem Reinigungsvorgang an der ersten Gruppe wird die Reinigungsflüssigkeit R über die Pumpe 4 in den zweiten Wannenbereich 1 b umgepumpt, so dass der Reinigungsvorgang an der zweiten Gruppe einsetzen kann, während die Backbleche 5 der ersten Gruppe abtropfen können. Darauf werden die gereinigten Backbleche 5 der ersten Gruppe aus dem Wannenbereich 1 a entfernt und durch eine neue dritte Gruppe von zu reinigenden Backblechen ersetzt, worauf nach erfolgter Reinigung der Backbleche der zweiten Gruppe im zweiten Wannenbereich 1b die Reinigungsflüssigkeit R durch die Pumpe 4 in den ersten Wannenbereich 1a zurückgepumpt wird, damit die neue dritte Gruppe von Backblechen gereinigt wird, während die zweite Gruppe abtropfen kann, bevor sie aus dem zweiten Wannenbereich 1 b entnommen und durch eine neue vierte Gruppe ersetzt wird. Hierauf kann sich der Vorgang wiederholen.

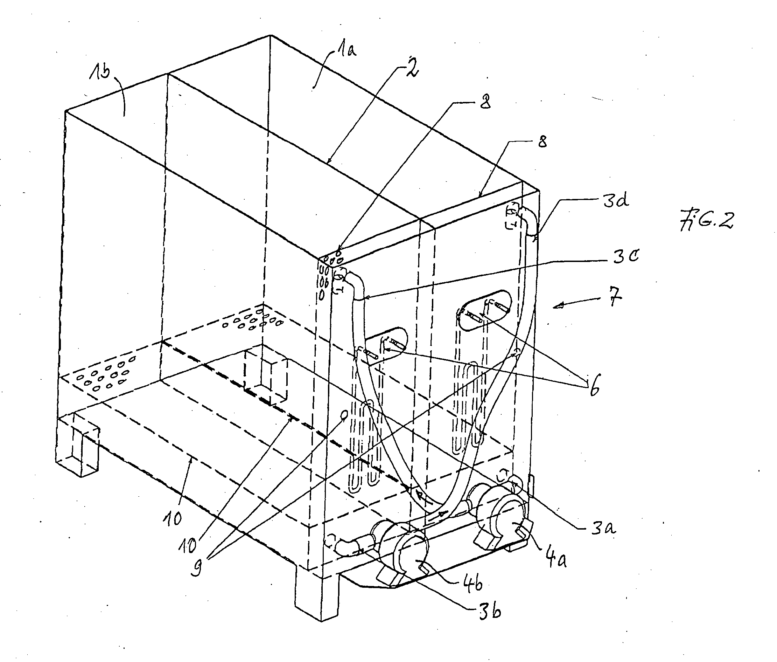

Die chemische Reinigungsflüssigkeit R wird zweckmäßigerweise durch eine in Fig. 2 schematisch angedeutete Heizvorrichtung 6 zur Verbesserung der Reinigungswirkung erwärmt. Dadurch, dass die Reinigungsflüssigkeit R nur von einem Wannenbereich in den anderen umgepumpt wird, werden die Wärmeverluste gering gehalten, so dass durch die Heizvorrichtung 6 lediglich so viel Wärme zugeführt zu werden braucht, dass die Reinigungsflüssigkeit R auf einer bestimmten Temperatur gehalten wird.

Fig. 2 zeigt schematisch eine praktische Ausführungsform einer im Grundriss etwa rechteckigen Wanne 1, die etwa in der Mitte in Längsrichtung durch eine Trennwand 2 in zwei Wannenbereiche 1a und 1 b unterteilt ist. Auf der Stirnseite der Wanne 1 wird bei 7 ein Steuerkasten montiert, in dem verschiedene Steuergeräte angeordnet sind und der mit entsprechenden Anschlüssen für die Energieversorgung versehen ist. Bei 6 sind Heizvorrichtungen für jeden Wannenbereich 1a und 1b angedeutet, die beispielsweise durch eine nicht dargestellte Steuereinheit so betrieben werden können, dass Wärme nur in dem Wannenbereich zugeführt wird, in dem sich die Reinigungsflüssigkeit R befindet. Bei 9 sind Thermostate zur Kontrolle der Temperatur angedeutet. Die Heizkörper 6 können so angeordnet sein, dass sie hinter einer gelochten Schutzwand 8 in der Wanne 1 positioniert sind. Die Heizkörper sind deshalb an einer Seitenwand angebracht und nicht am Boden der Wanne, damit sie nicht von Schmutzablagerungen bedeckt werden können, die die Heizleistung beeinträchtigen können.

Es kann eine Pumpe 4 mit umkehrbarer Laufrichtung vorgesehen werden oder es kann für jeden Wannenbereich 1 a und 1 b eine Pumpe 4a und 4b vorgesehen sein, die über Fluidleitungen 3c, 3d die Reinigungsflüssigkeit zwischen den beiden Wannenbereichen 1a und 1b in Pfeilrichtung in Fig. 2 umpumpen. Mit 3a und 3b sind Abpumpstutzen bezeichnet.

An der Stirnwand des Steuerkastens 7 können Bedienschalter und weitere Überwachungsgeräte vorgesehen sein.

Es sind verschiedene Abwandlungen der Bauformen möglich. So können mehr als zwei Wannenbereiche vorgesehen werden, indem mehrere Wannen nebeneinander positioniert werden. Auch ist es möglich, die chemische Reinigungsflüssigkeit R in einen gesonderten Behälter umzupumpen.

Nach einer anderen Ausführungsform können mehrere Wannenbereiche ringförmig angeordnet werden, wobei z.B. jeweils zwischen zwei Wannenbereichen oder mehreren Wannenbereichen ein Umpumpen der Reinigungsflüssigkeit vorgenommen werden kann, je nach Einrichtung der Taktvorgänge beim Reinigen, Abtropfen, Spülen und Trocknen.

Der Betrieb der Vorrichtung kann auch in der Weise automatisiert werden, dass in vorgegebenen Zeitabständen ein Umpumpen der Reinigungsflüssigkeit erfolgt in Verbindung mit einer automatisierten Entnahme der gereinigten Backbleche und automatisierten Beschicken von zu reinigenden Backblechen.

Am Boden der Wannenbereiche können Lochbleche 10 vorgesehen sein, durch die sich Verschmutzungen in der Reinigungsflüssigkeit absetzen können. Es können auch Filter in den Fluidleitungen vorgesehen werden, damit Verunreinigungen der Reinigungsflüssigkeit beim Umpumpen zurückgehalten werden.

Anstelle einer Unterteilung einer Wanne 1 in Wannenbereiche 1 a, 1 b können auch gesonderte Wannen nebeneinander angeordnet werden. Hierbei ist es auch möglich, die einzelnen Wannen oder Wannenbereiche mit einer Wärmeisolierung zu versehen, um den Wärmeverlust der Reinigungsflüssigkeit möglichst gering zu halten.

Es ist auch möglich, die Reinigungsflüssigkeit in der Wanne abzusenken oder in einen anderen Behälter abzulassen, worauf sie durch eine entsprechende Einrichtung wieder zurückbefördert wird. Auf diese Weise ist es möglich, mit nur einem Behälter zu arbeiten, in den die Backbleche zum Lösen der Backrückstände in Reinigungsflüssigkeit eingetaucht werden, worauf nach dem Lösen der Backrückstände die Reinigungsflüssigkeit in einen Speicherbereich abgepumpt wird. Hierauf können die Backbleche in dem entleerten Behälter abtropfen, worauf sie aus dem Behälter gereinigt entnommen werden können. Hierauf wird die Reinigungsflüssigkeit wieder zurück in den Behälter gepumpt und eine neue Charge von Backblechen in die Reinigungsflüssigkeit eingetaucht.

Nach dem Um- oder Abpumpen der Flüssigkeit aus dem Behälter kann eine automatische Spülung der Bleche erfolgen, wobei beispielsweise oberhalb der Reinigungskammer Sprüharme angeordnet werden. Es können Steuerventile, wie beispielsweise Magnetventile vorgesehen werden, um über die Sprüharme eine Spülflüssigkeit über die Bleche zu sprühen, die dann in dem Behälter abtropfen können.

## Patentansprüche

1. Verfahren zum Reinigen von Backblechen, wobei
- eine erste Charge von Backblechen in einen mit Reinigungsflüssigkeit gefüllten ersten Wannenbereich (1a) einer mit einer Trennwand (2) versehenen Wanne (1) eingetaucht wird, die einen zweiten Wannenbereich (1b) aufweist, wobei beide Wannenbereiche (1a; 1b) seitlich beheizbar sind und über eine Steuereinheit betreibbar sind und
- nach dem Lösen von Backrückstände die Reinigungsflüssigkeit in den zweiten Wannenbereich (1 b) abgepumpt wird, sodass die erste Charge von Backblechen im ersten Wannenbereich (1 a) abtropfen kann,
- worauf die erste Charge von Backblechen aus dem ersten Wannenbereich entnommen wird und die Reinigungsflüssigkeit aus dem zweiten in den ersten Warinenbereich (1a) zurückgepumpt wird,
- nachdem im zweiten Wannenbereich (1 b) eine zweite Charge von Backblechen gereinigt wurde, sodass die zweite Charge von Backblechen im zweiten Wannenbereich (1 b) abtropfen kann

2. Verfahren nach Anspruch 1, wobei in den zweiten Wannenbereich (1 b) eine zweite Charge von Backblechen eingesetzt wird, bevor die Reinigungsflüssigkeit aus dem ersten Wannenbereich (1 a) in den zweiten Wannenbereich (1 b) gepumpt wird, und eine weitere Charge von Backblechen in den ersten Wannenbereich (1 a) eingesetzt wird, während im zweiten Wannenbereich die Charge von Backblechen gereinigt wird.

3. Vorrichtung zum Reinigen von Backblechen zur Durchführung des Verfahrens nach Anspruch 1 und 2, umfassend eine Wanne (1) mit wenigstens einer Trennwand (2) zur Unterteilung der Wanne in wenigstens einen ersten Wannenbereich (1a) und einen zweiten Wannenbereich (1b), die durch eine Fluidleitung (3c, 3d) derart miteinander verbunden sind, dass mittels wenigstens einer Pumpe (4) Reinigungsflüssigkeit aus dem Bodenbereich des einen Wannenbereichs in den oberen Bereich des anderen Wannenbereichs umgepumpt werden kann, wobei in jedem Wannenbereich (1 a, 1b) eine Heizvorrichtung (6) an einer Seitenwand des Wannenbereichs angebracht ist, und an der Wanne (1) eine Steuereinrichtung (7) mit Bedienschaltern angebracht ist,

4. Vorrichtung nach Anspruch 3,
wobei die Heizvorrichtung (6) hinter einer gelochten Schutzwand (8) angeordnet ist.

5. Vorrichtung nach einem der Ansprüche 3 oder 4, wobei ein Lochblech (10) in einem Abstand vom Wannenboden angeordnet ist, sodass die Bleche abtropfen und gespult werden können.

6. Vorrichtung nach einem der vorhergehenden Ansprüche 3 bis 5, wobei mehrere Wannenbereiche nebeneinander angeordnet sind.

7. Vorrichtung nach einem der vorhergehenden Ansprüche 3 bis 5, wobei mehrere Wannenbereiche ringförmig nebeneinander angeordnet sind.

## Claims

1. Method for cleaning baking trays, wherein
- a first load of baking trays is dipped into a first vat area (1a), filled with cleaning fluid, of a vat (1) which is provided with a partition (2) and has a second vat area (1b), wherein both vat areas (1a; 1b) are heatable laterally and are operable by means of a control unit, and
- after the loosening of baking residues, the cleaning fluid is pumped off into the second vat area (1b), so that the first load of baking trays can drain in the first vat area (1a),
- whereupon the first load of baking trays is removed from the first vat area and the cleaning fluid is pumped back into the first vat area (1a) from the second vat area,
- after a second load of baking trays has been cleaned in the second vat area (1 b), so that the second load of baking trays can drain in the second vat area (1b).

2. Method according to claim 1, wherein a second load of baking trays is inserted in the second vat area (1 b) before the cleaning fluid is pumped out of the first vat area (1a) into the second vat area (1 b), and a further load of baking trays is inserted into the first vat area (1a) while the load of baking trays in the second vat area is cleaned.

3. Device for cleaning baking trays for carrying out the method of claims 1 and 2, comprising
a vat (1) having at least a partition (2) for dividing the vat into at least a first vat area (1a) and a second vat area (1b), which are communicated with each other by a fluid line (3c, 3d) such that cleaning fluid can be pumped out of the bottom area of the one vat area into the upper area of the other vat area by means of at least a pump (4), wherein a heating device (6) is mounted in each vat area (1a, 1b) at a side wall of the vat area, and a control means (7) having operating switches is mounted at the vat (1)

4. Device according to claim 3,
wherein the heating device (6) is arranged behind a perforated protective wall (8).

5. Device according to one of claims 3 and 4, wherein a perforated sheet (10) is arranged at a distance from the vat bottom, so that the trays can drain and be washed,

6. Device according to one of the preceding claims 3 to 5, wherein a plurality of vat areas are arranged adjacent each other.

7. Device according to one of the preceding claims 3 to 5, wherein a plurality of vat areas are arranged adjacent each other in an annular manner.

## Revendications

1. Procédé de nettoyer des plaques de four, dans lequel
- une première charge de plaques de four est plongée dans une première zone de cuve (1a) d'une cuve (1), la première zone de cuve (1a) étant remplie de liquide de nettoyage, la cuve étant munie d'une cloison de séparation (2) et ayant une deuxième zone de cuve (1 b), les deux zones de cuve (1a; 1 b) étant latéralement réchauffables et pouvant être opérer par une unité de contrôle et
- après le décollement de résidus brûlés, le liquide de nettoyage est pompé dans la deuxième zone de cuve (1 b) afin de pouvoir laisser s'égoutter la première charge de plaques de four dans la première zone de cuve (1 a),
- après quoi la première charge de plaques de four est enlevée de la première zone de cuve et le liquide de nettoyage est pompé de la deuxième zone de cuve dans la première zone de cuve (1a),
- après une deuxième charge de plaques de four a été nettoyée dans la deuxième zone de cuve (1b), afin de pouvoir laisser s'égoutter la deuxième charge de plaques de four dans la deuxième zone de cuve (1b),

2. Procédé selon la revendication 1, dans lequel une deuxième charge de plaques de four est insérée dans la deuxième zone de cuve (1 b) avant de pomper le liquide de nettoyage de la première zone de cuve (1 a) à la deuxième zone de cuve (1 b), et une charge de plus de plaques de four est insérée dans la première zone de cuve (1a) pendant que la charge de plaques de four dans la deuxième zone de cuve est nettoyée

3. Dispositif pour nettoyer des plaques de four pour réaliser le procédé selon les revendications 1 et 2, comprenant
une cuve (1) ayant au moins une cloison de séparation (2) pour cloisonner la cuve en au moins une première zone de cuve (1a) et une deuxième zone de cuve (1 b), qui sont communiquées l'une à l'autre par un conduit de fluide (3c, 3d) afin de pouvoir transvaser de liquide de nettoyage au moyen d'au moins une pompe (4) de la zone de fond d'une des zones de cuve à la zone supérieure de l'autre zone de cuve, un dispositif de chauffage (6) étant mis en place à une paroi latérale de la zone de cuve dans chaque zone de cuve (1 a, 1 b) et un dispositif de contrôle (7) ayant des commutateurs de commande étant mis en place à la cuve (1).

4. Dispositif selon la revendication 3,
dans lequel le dispositif de chauffage (6) est agencé derrière une paroi de protection perforée (8).

5. Dispositif selon l'une des revendications 3 ou 4, dans lequel une plaque perforée (10) est agencée à distance du fond de la cuve afin de pouvoir laisser s'égoutter les plaques et de laver celles-ci,

6. Dispositif selon l'une des revendications précédentes 3 à 5, dans lequel plusieures zones de cuve sont agencées les unes à côté des autres

7. Dispositif selon l'une des revendications précédentes 3 à 5, dans lequel plusieures zones de cuve sont agencées les unes à côté des autres d'une manière annulaire.
